Europäisches Patentamt

(19) European Patent Office

Office européen des brevets

(11) **EP 0 935 863 B1**

(12) **EUROPÄISCHE PATENTSCHRIFT**

(45) Veröffentlichungstag und Bekanntmachung des Hinweises auf die Patenterteilung:
**02.05.2002 Patentblatt 2002/18**

(21) Anmeldenummer: **97912044.1**

(22) Anmeldetag: **07.10.1997**

(51) Int Cl.⁷: **H04L 12/56**, H04Q 11/04

(86) Internationale Anmeldenummer:
**PCT/DE97/02296**

(87) Internationale Veröffentlichungsnummer:
**WO 98/19427 (07.05.1998 Gazette 1998/18)**

(54) **VERFAHREN ZUR WEITERLEITUNG MIT 100% LEITUNGSAUSLASTUNG VON ASYNCHRON ÜBERTRAGENEN NACHRICHTENZELLEN**

METHOD OF ROUTING ASYNCHRONOUSLY TRANSFERRED MESSAGE CELLS WITH A 100 % POWER CAPACITY UTILIZATION

PROCEDE POUR LA TRANSMISSION AVEC UNE CAPACITE DE 100 % D'ELEMENTS DE MESSAGES TRANSMIS EN MODE ASYNCHRONE

(84) Benannte Vertragsstaaten:
**BE CH DE ES FR GB IT LI NL**

(30) Priorität: **31.10.1996   DE 19644100**

(43) Veröffentlichungstag der Anmeldung:
**18.08.1999   Patentblatt 1999/33**

(73) Patentinhaber: **Infineon Technologies AG
81669 München (DE)**

(72) Erfinder: **STEMPLINGER, Robert
D-81377 München (DE)**

(74) Vertreter: **Reinhard - Skuhra - Weise & Partner
Friedrichstrasse 31
80801 München (DE)**

(56) Entgegenhaltungen:
**EP-A- 0 734 195          WO-A-96/29805
US-A- 5 533 009**

**Beschreibung**

Der Anmeldungsgegenstand betrifft ein Verfahren zur Weiterleitung mit 100 %iger Leitungsauslastung von nach einem asynchronen Übertragungsverfahren weitergeleiteten Nachrichtenzellen.

Zur Anpassung an die Datenraten von Schnittstellen werden Weiterleitungseinrichtungen, die mehrere Blöcke aufweisen können, eingesetzt. Ein Block mag die Datenrate eines virtuellen Pfades anpassen (shapen). Die Daten mehrerer Blöcke mögen einer Schnittstelle zugeführt sein. Eine standardisierte Schnittstelle unterstützt Zurückstauen von Verkehr (backpressure). Führt nur ein Block Daten der Schnittstelle zu und ist die für den Block eingestellte Datenrate etwas höher eingestellt als die Datenrate der Schnittstelle, kann für die Schnittstelle eine 100 %ige Lastrate erzielt werden. Werden die Daten mehrerer Blöcke, d. h. mehrerer virtueller Pfade, einer Schnittstelle, die Zurückstauen von Verkehr unterstützt, zugeführt, so ist eine 100 %ige Lastrate der Leitungsschnittstelle nicht gegeben.

Aus der EP 0734195 ist ein Verfahren zur Weiterleitung von nach einem asynchronen Übertragungsverfahren weitergeleiteten Nachrichtenzellen bekannt, bei dem Nachrichtenzellen in mehreren Blöcken zwischengespeichert werden, bevor sie über eine Schnittstelle, die Zurückstauen von Verkehr unterstützt, weitergeleitet werden.

Aus der US 5533009 ist eine Bandbreiten- und Zugangssteuerung für ein ATM Netz bekannt, bei dem Nachrichtenzellen in zwei Warteschlangen zwischengespeichert werden, wobei die Nachrichtenzellen der einen Warteschlange nach Maßgabe der jeweiligen Datenrate ihrer zugehörigen virtuellen Verbindung und die Nachrichtenzellen der anderen Warteschlange nach Maßgabe des für ihre zugehörige virtuelle Verbindung festgelegten Qualitätskriteriums weitergeleitet werden.

Dem Anmeldungsgegenstand liegt das Problem zugrunde, ein Verfahren anzugeben, bei dem für eine Schnittstelle, der Daten mehrerer Blöcke zugeführt sind, eine Lastrate von 100 % erzielbar ist.

Das Problem wird durch die Merkmale des Anspruchs 1 gelöst.

Der Anmeldungsgegenstand vermeidet die Weiterleitung von Leer-Daten für einen Block, der zwar nach der für ihn vereinbarten Datenrate eine Berechtigung zur Weiterleitung von Daten erhält aber augenblicklich keine Daten vorliegen hat. Der Anmeldungsgegenstand bringt eine vollständige Ausnutzung der Leitungsschnittstelle mit Nutzdaten mit sich.

Der Anmeldungsgegenstand wird im folgenden in einem zum Verständnis erforderlichen Umfang als Ausführungsbeispiel anhand von Figuren näher beschrieben.

Dabei zeigen:

FIG 1    eine prinzipielle Darstellung einer Anordnung zur Behandlung von Nachrichtenzellen,

FIG 2    nähere Einzelheiten der in FIG 1 mit SBS bezeichneten Einheit,

FIG 3    nähere Einzelheiten der in FIG 1 mit FD bezeichneten Einheit,

FIG 4    eine weitere Ausgestaltung der Einheit FD,

FIG 5    eine weitere Ausgestaltung der Einheit FD und

FIG 6    eine weitere Ausgestaltung der Einheit FD.

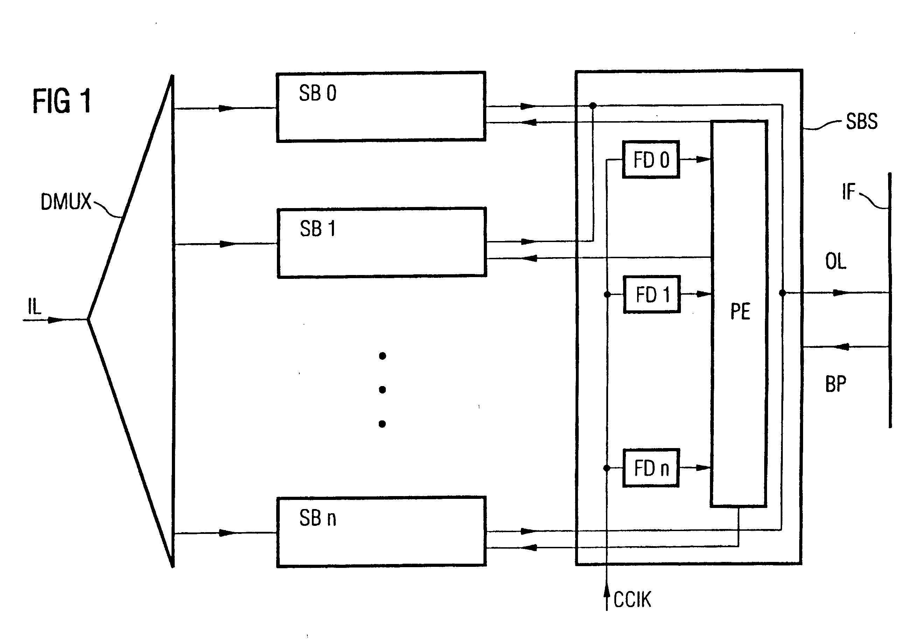

Bei der Weiterleitungseinrichtung nach FIG 1 sind Nachrichtenzellen, die zur Weiterleitung über eine Ausgangsleitung OL (für: Output Line) bestimmt sind, in Blöcken SB0.. Sbn, beispielsweise 64 Blöcke, als Warteschlangen organisiert zwischengespeichert. Die Nachrichtenzellen weisen feste Länge auf und werden nach einem asynchronen Übertragungsverfahren, insbesondere dem ATM (Asynchrones Transfer Mode)-Übertragungsverfahren im Zuge von virtuellen Verbindungen weitergeleitet. Die einem jeweiligen Block zugeführten Nachrichtenzellen mögen auf einer Eingangsleitung IL (für: Input Line) herangeführt und in einer Verteileinrichtung DMUX (für: Demultiplexer) nach Maßgabe der zugehörigen virtuellen Verbindung einem jeweiligen Block zugeführt sein. Eine Zuteilungseinrichtung SBS (für: Scheduler Block Scheduler) teilt den Blöcken Berechtigungen zur Weiterleitung jeweils einer Nachrichtenzelle an eine Schnittstelle IF (für: Interface) zu.

Die Zeitspanne $T_{cell}$, während der eine weitergeleitete Nachrichtenzelle eine Leitung belegt, legt einen Nachrichtenzellenzyklus fest. Ein Nachrichtenzellenzyklus gleicht einer Periode eines Nachrichtenzellentaktes CClk (für: Cell Clock). Die Zuteilungseinrichtung bestimmt für jeden Nachrichtenzellenzyklus, welcher Block eine Nachrichtenzelle weiterleitet. Die Zuteilungseinrichtung weist für jeden Block einen Zähler FD0..FDn auf. Den Zählern ist eingangsseitig der Nachrichtenzellentakt zugeführt. Die Zähler geben bei Erreichen eines Zählerstandes, der der für den zugehörigen Block vereinbarten Nachrichtenzellenrate entspricht, ein Anspruchszeichen an eine Priorisierungseinrichtung PE (für: Priority Encoder) ab. Die Priorisierungeinrichtung wählt unter den Blöcken, für die gerade ein Anspruchszeichen gesetzt ist, nach Maßgabe der den einzelnen Blöcken zugeordneten Prioritäten einen Block aus und teilt ihm eine Berechtigung zur Weiterleitung einer Nachrichtenzelle zu. Die Priorisierungseinrichtung mag jeden Nachrichtenzellenzyklus die Zähler auf gesetzte Anspruchszeichen nach einem in Fachkreisen als Round-Robin-Mechanismus bezeichneten Mechanismus absuchen.

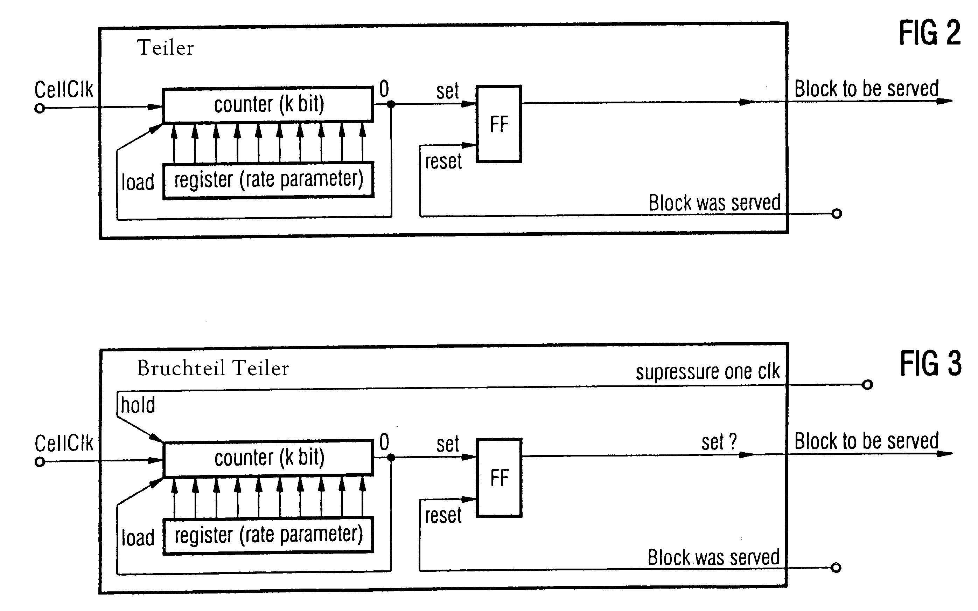

Der Zähler nach FIG 2 soll eine vorgegebene Nachrichtenzellenrate einstellen können. Dazu wird der Nachrichtenzellentakt mittels eines Ratenzählers (counter k bit) durch einen vorgegebenen Wert geteilt. Die Größe dieses Teilers wird vorgegebenen durch die minimal einzustellende Nachrichtenzellenrate $R_{min}$. Im Register (rate parameter) ist der Ratenparameter $T_{serv}$ = 1 ./. $R_{serv}$ abgelegt. Der Ratenzähler wird mit $R_{serv}$ geladen und vermindert seinen Zählerwert mit jedem Nachrichtenzellenzyklus um 1. Erreicht der Zählerstand den Wert 0, wird der Zähler erneut geladen und am Ausgang eines Flip Flops FF ein Anspruchszeichen (Flag) gesetzt, um anzuzeigen, daß eine Nachrichtenzelle aus dem zugehörigen Block gelesen werden kann. Wenn eine Nachrichtenzelle für diesen Block ausgelesen wurde, wird dieses Flag zurückgesetzt. Die Nachrichtenzellenrate (service rate) ergibt sich durch $R_{serv}$ = $1/(T_{serv} \times T_{cell})$.

Bei zunehmenden Nachrichtenzellenraten ist die einstellbare Schrittweite, die in Fachkreisen auch als Granularität bezeichnet wird, (Teilerverhältnis 1,2,3,4...) zunehmend grober.

Für den Bruchteil Teiler (fractional devider) nach FIG 3 werden zwei Variablen gespeichert:

$T_{serv}$frac: bruchteiliger (fractional) Anteil des Ratenparameters (z bits)
$N_{serv}$frac: momentaner Summe des Anteils (z bits)
$T_{serv}$count: ganzzahliger (integer) Anteil des Ratenparameters (k bits)
$N_{serv}$count: momentaner Zählerstand (k bits)

Die Berechnung des fractionalen Anteils erfolgt entweder lokal im entsprechenden Block jeweils bei Ablauf des Zählers oder einmal zentral (Variablen in Tabellen) jeweils beim Auslesen aus diesem Block.

Der Algorithmus lautet wie folgt:
if ($N_{serv}$count = 0 / block was served) then
  $N_{serv}$frac = $N_{serv}$frac + $T_{serv}$frac modulo $2^z$
  if (overflow of $N_{serv}$frac) then
    set Flag 'supressure one clk'

Im nächsten Nachrichtenzellzyklus wird das Anspruchszeichen Flag zurückgesetzt und die Zählung für diesen Nachrichtenzellzyklus unterbrochen.
Die Rate ergibt sich somit zu:

$$R_{Serv} = 1 / [(T_{serv}count + T_{serv}frac) * T_{cell})]$$

$$z = ld [1 / (Granularität (z.B 1\%))]$$

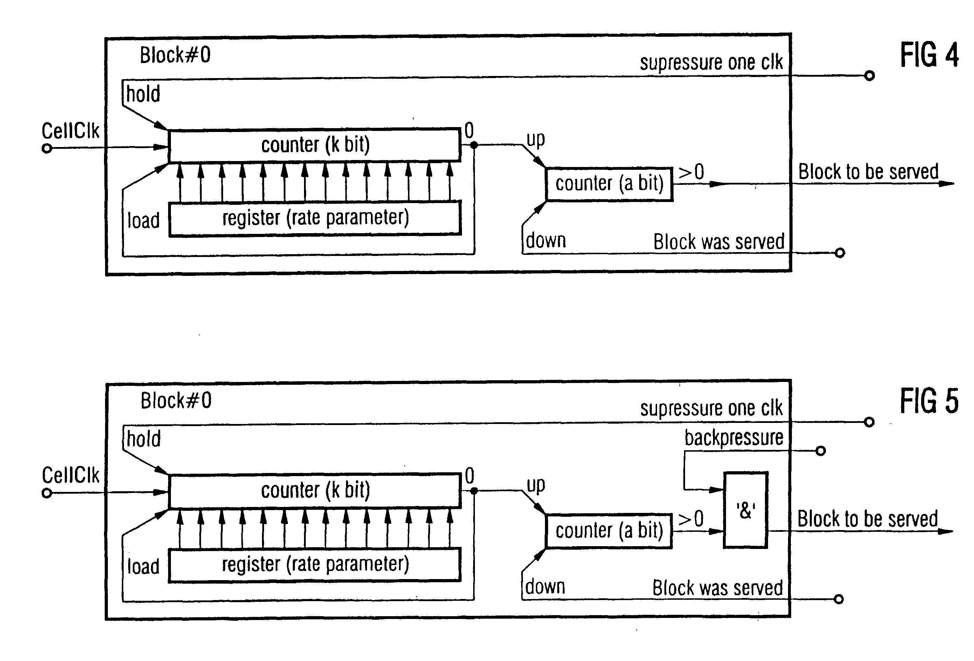

Sämtliche Zähler laufen unabhängig voneinander parallel. Mehrere Zähler können gleichzeitig in einem Nachrichtenzellenzyklus ablaufen. Jeden Nachrichtenzellenzyklus kann jedoch nur ein Block bedient werden, so dass Zähler auch mehrfach ablaufen können, ohne dass sie bedient wurden. Daraus ergibt sich eine Verzögerung der Nachrichtenzellen (Cell Delay Variation). Für jeden Block ist die vereinbarte Nachrichtenzellenrate einzuhalten. Bei dem Zähler nach FIG 4 ist das Flip Flop aus FIG 4, das das Anspruchzeichen abgibt, durch einen Ereigniszähler (counter a bit) ersetzt. Der Zählerstand dieses Ereigniszählers wird um 1 erhöht, wenn der Ratenzähler (counter k bit) abläuft. Der Zählerstand des Ereigniszählers wird um 1 erniedrigt, wenn für den zugehörigen Block eine Nachrichtenzelle ausgelesen wurde. Der Ereigniszähler kann so viele Zustände einnehmen, wie bei der Weiterleitungseinrichtung Blöcke vorgesehen sind. Solange der Zählerstand des Ereigniszählers größer als 0 ist, wird ein Anspruchszeichen an die Priorisierungseinrichtung abgegeben.

Die Schnittstelle, an die die Nachrichtenzellen weitergeleitet werden, möge durch eine standardisierte UTOPIA-Schnittstelle gegeben sein. Diese Schnittstelle unterstützt Zurückstauen von Verkehr (back pressure). Die Zuordnungseinrichtung soll auf Zurückstau-Signale der Schnittstelle reagieren können, wobei die vereinbarten Nachrichtenzellenraten dennoch eingehalten werden sollen. Einer physikalischen Schnittstelle kann ein Block (port shaping) oder mehrere Blöcke (virtuell path shaping) zugeordnet sein. Bei der Ausgestaltungsform des Anmeldungsgegenstandes nach FIG 5 ist das von dem Ereigniszähler abgegebene Anspruchssignal mit dem Zurückstau-Signal der zugeordneten Schnittstelle logisch verknüpft. Ist das Zurückstau-Signal gesetzt, wird ein Anspruchszeichen an die Priorisierungseinrichtung nicht abgegeben, womit eine Weiterleitung einer Nachrichtenzelle unterbleibt. Die Ablaufereignisse werden jedoch in dem Ereigniszähler gezählt, so daß Nachrichtenzellen, die während eines wirksamen Zurückstau-Signales nicht weitergeleitet wurden, in den Nachrichtenzellenzyklen, die nach Ausbleiben des wirksamen Zurückstau-Signales folgen, weitergeleitet werden, womit die vereinbarte Nachrichtenzellenrate eingehalten werden kann.

Die Weiterleitungseinrichtung teilt einer nachfolgenden Schnittstelle Nachrichtenzellen in einer Menge zu, die die maximale Datenrate der Schnittstelle berücksichtigt. Wird die Rate, mit der die Weiterleitungseinrichtung Nachrichtenzellen weiterleitet, etwas höher eingestellt, als sie der Datenrate der Schnittstelle entspricht, kann eine 100 %ige Auslastung der Schnittstelle erreicht werden, wobei durch die Zurückstau-Signale gesteuert wird.

Bei Führung von virtuellen Verbindungen, deren Nachrichtenzellen durch die Zuteilungseinrichtung behandelt sind, über eine Schnittstelle ist die Einhalten einer Auslastung der Schnittstelle zu 100% zunächst nicht gegeben.

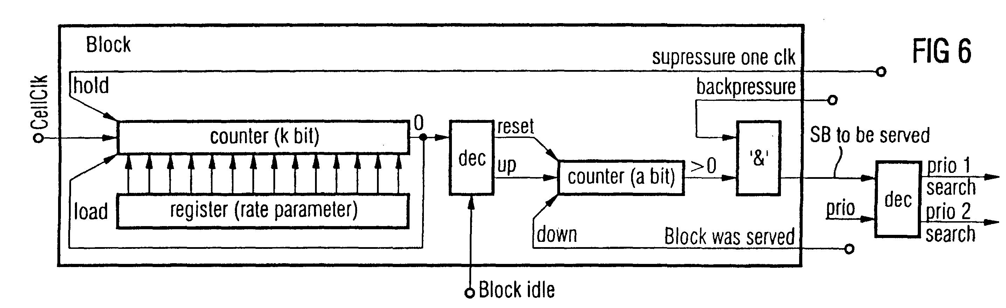

Bei der Ausführungsform nach FIG 6 wird ein Block einem virtuellen Pfad (mit der Rate dieses virtuellen Pfads) und ein gesonderter Block für die restliche Rate der Schnittstelle zugeordnet. Der gesonderte Block erhält eine niedrigere Priorität beim Auslesealgorithmus. Gleichzeitig werden die Blöcke um eine Anzeige Block idle erweitert, ob ein betreffender Block Nachrichtenzellen enthält oder leer ist. Die Anzeige Block idle ist einer zwischen den Ratenzähler und den Ereigniszähler eingefügten Decodiereinrichtung dec zugeführt. Läuft ein Ratenzähler ab und ist der zugehörige Block leer, so wird der Ereigniszähler rückgesetzt. Es werden also nur die Blöcke bedient, die Nachrichtenzellen enthalten, womit kein Nachrichtenzellenzyklus für die Weiterleitung einer Nachrichtenzelle verlorengeht.

**Patentansprüche**

1. Verfahren zur Weiterleitung mit 100 %iger Leitungsauslastung von nach einem asynchronen Übertragungsverfahren weitergeleiteten Nachrichtenzellen demzufolge

   - in mehreren Blöcken (SB0..SBn) zwischengespeicherte Nachrichtenzellen zur Weiterleitung über eine Schnittstelle (IF) bestimmt sind
   - die Summe der für die Blöcke vereinbarten Nachrichtenzellenraten etwas größer ist als die Nachrichtenzellenrate der Schnittstelle
   - die Schnittstelle bei Überschreitung ihrer Nachrichtenzellenrate ein Zurückstau-Signal (BP) abgibt
   - für jeden Block ein Zähler (FD0..FDn) gegeben ist
   - die Zähler mit einem Taktsignal (CClk), dessen Periode einem Nachrichtenzellenzyklus entspricht, getaktet sind
   - ein Zähler bei Erreichen eines Zählerstandes, der der für den zugehörigen Block vereinbarten Nachrichtenzellenrate entspricht, ein Anspruchs-Signal (Flag) zur Weiterleitung einer Nachrichtenzelle abgibt
   - jeder Block bei Nichtvorhandensein einer zur Weiterleitung bestimmten Nachrichtenzelle ein Leer-Signal abgibt
   - für einen Block nur dann ein wirksames Anspruchs-Signal abgegeben wird, wenn kein wirksames Zurückstau-Signal und kein wirksames Leer-Signal gegeben sind
   - ein Block eine niedrige Priorität aufweist
   - eine Zuteilungseinrichtung (SBS) für jeden Nachrichtenzellenzyklus genau einem Block eine Berechtigung zur Weiterleitung einer Nachrichtenzelle nach Maßgabe der Höhe der Prioritäten der Blöcke, für die gerade ein wirksames Anspruchs-Signal der Zuteilungseinrichtung zugeführt ist, zuteilt.

**Claims**

1. Method for the forwarding, with 100% utilization, of message cells forwarded using an asynchronous transmission method, according to which

   - message cells temporarily stored in a plurality of blocks (SB0..SBn) are intended for forwarding via an interface (IF)
   - the sum of the message cell rates agreed for the blocks is slightly higher than the message cell rate of the interface
   - on exceeding its message cell rate, the interface sends a backpressure signal (BP)
   - a counter (FD0..FDn) is provided for each block
   - the counters are timed with a clock signal (CClk) whose period corresponds to one message cell cycle
   - on reaching a counter level corresponding to the message cell rate agreed for the associated block, a counter sends a flag for forwarding a message cell
   - in the absence of a message cell intended for forwarding, each block sends an idle signal
   - an active flag is sent for a block only if no active backpressure signal and no active idle signal are present
   - one block has a low priority
   - for each message cell cycle, an allocation device (SBS) allocates an authorization to precisely one block to forward a message cell according to the level of the priorities of the blocks for which an active flag is currently being supplied to the allocation device.

**Revendications**

1. Procédé de routage avec un taux de charge de la ligne à 100%, appliqué aux cellules de données acheminées par un procédé de transfert asynchrone, selon lequel :

   - des cellules de données stockées temporairement dans plusieurs blocs (SB0 ... SBn) sont destinées à être acheminées par l'intermédiaire d'une interface (IF);
   - la somme des vitesses de transmission des cellules de données convenues pour les blocs est quelque peu supérieure à la vitesse de transmission des cellules de données sur l'interface ;
   - l'interface émet un signal de reflux (BP) chaque fois que sa vitesse de transmission des cellules de données est dépassée ;
   - un compteur (FD0 ... FDn) est prévu pour chaque bloc ;
   - les compteurs sont synchronisés par un signal de synchronisation (CClk), dont la période correspond à un cycle de cellules de données ;
   - un compteur émet un signal de déclenchement (flag = drapeau) pour le routage d'une cellule de données chaque fois qu'il atteint une position qui correspond à la vitesse de transmission des cellules de données convenue pour le bloc correspondant ;

- chaque bloc émet un signal vide en cas d'absence d'une cellule de données destinée au routage ;

- un signal de déclenchement actif est émis pour un bloc uniquement si aucun signal de reflux actif et aucun signal vide actif n'ont été émis ;

- un bloc dispose d'une faible priorité ;

- une unité d'assignation (SBS) assigne dans chaque cycle de cellules de données à un seul bloc une autorisation pour le routage d'une cellule de données en fonction du degré de priorité des blocs pour lesquels un signal de déclenchement actif vient juste d'être transmis vers l'unité d'assignation.

FIG 1

SBS
IF
OL
BP
PE
FD 0
FD 1
FD n
CCIK
SB 0
SB 1
SB n
DMUX
IL

FIG 2

Teiler

CellClk ○——→ | counter (k bit) | 0 ·——set——→ | FF | ——————————→ Block to be served

load ↑↑↑↑↑↑↑↑↑↑

| register (rate parameter) |

reset

Block was served ○

FIG 3

Bruchteil Teiler

supressure one clk ○

hold

CellClk ○——→ | counter (k bit) | 0 ·——set——→ | FF | ——set ?——→ Block to be served

load ↑↑↑↑↑↑↑↑↑↑

| register (rate parameter) |

reset

Block was served ○

EP 0 935 863 B1

EP 0 935 863 B1

**FIG 4**

Block#0

hold

CellClk

counter (k bit)    0

register (rate parameter)

load

up

counter (a bit)    >0

down

supressure one clk

Block to be served

Block was served

**FIG 5**

Block#0

hold

CellClk

counter (k bit)    0

register (rate parameter)

load

up

counter (a bit)    >0

down

supressure one clk

backpressure

'&'

Block to be served

Block was served

FIG 6

EP 0 935 863 B1